# EUROPÄISCHE PATENTANMELDUNG

(11) **EP 2 388 693 A1**
(43) Veröffentlichungstag der Anmeldung: **23.11.2011**
(21) Anmeldenummer: 10163651.2
(22) Anmeldetag: 21.05.2010
(51) Int. Cl.: G06F 9/445

(54) **Verfahren zur Aktualisierung der Datenstruktur eines Instanz-Datenbausteins**

(71) Anmelder: Siemens Aktiengesellschaft, 80333 München (DE)
(72) Erfinder: Meilland, Gerald, 76135, Karlsruhe (DE)

(57) **Zusammenfassung**

Verfahren zur Aktualisierung der Datenstruktur eines Instanz-Datenbausteins

Die Erfindung betrifft ein Verfahren zur Aktualisierung der Datenstruktur eines Instanz-Datenbausteins, welcher einem Funktionsbaustein zugeordnet ist, den ein Anwender mittels eines Software-Werkzeugs eines Engineering-Systems erstellt, wobei die Datenstruktur des Instanz-Datenbausteins die Datenstruktur des Funktionsbausteins umfasst, die mindestens Name, Adresse und Typ von Variablen aufweist, wobei der Funktionsbaustein mit dem zugeordneten Instanz-Datenbaustein in ein Automatisierungsgerät zur Verwirklichung einer Prozessfunktionalität im Rahmen eines Anwenderprogramms zur Steuerung eines technischen Prozesses geladen wird und wobei während der Steuerung des technischen Prozesses in den Instanz-Datenbaustein Aktualwerte für die Variablen eingetragen werden. Es werden Maßnahmen vorgeschlagen, welche verhindern, dass aufgrund einer Änderung der Datenstruktur die Aktualwerte verloren gehen.

## Beschreibung

Verfahren zur Aktualisierung der Datenstruktur eines Instanz-Datenbausteins

Die Erfindung betrifft ein Verfahren zur Aktualisierung der Datenstruktur eines Instanz-Datenbausteins gemäß dem Oberbegriff des Anspruchs 1. Darüber hinaus betrifft die Erfindung eine Anordnung mit einem Automatisierungsgerät und einem Engineering-System, welche zur Durchführung des Verfahrens geeignet ist.

Im Rahmen einer strukturierten Programmierung ist ein Programm zur Steuerung eines technischen Prozesses mittels eines Automatisierungsgerätes oder einer Automatisierungseinrichtung häufig in kleine und überschaubare Programmbausteine, z. B. so genannte Funktionsbausteine, unterteilt. Derartige Funktionsbausteine sind beispielsweise aus dem Siemens-Katalog ST 70, Ausgabe 2009, Seiten 6/40 bis 6/53 in Form so genannter Standard-Funktionsbausteine bekannt. Diese Funktionsbausteine sind zur Integration in ein Anwenderprogramm vorgesehen und verwirklichen verschiedene PID-Reglerfunktionalitäten, indem zu diesem Baustein verschiedene Instanz-Datenbausteine verwendet werden, welche jeweils die gleiche Datenstruktur aufweisen aber mit unterschiedlichen Daten versehen sind.

Ein Anwender kann auch selbst Funktionsbausteine mittels eines Software-Werkzeugs eines Engineering-Systems erstellen. Dazu legt der Anwender mit Hilfe des Software-Werkzeugs menügesteuert einen Namen für diesen Funktionsbaustein sowie Variablen mit gewünschten Parametern, wie z. B. Name oder Datentyp dieser Variablen, fest. Anschließend erstellt der Anwender für diesen Funktionsbaustein mittels einer geeigneten Programmiersprache ein Programm, das die festgelegten Variablen verwendet. Ferner gibt der Anwender einen Instanz-Datenbaustein vor, der für diese Instanz des Funktionsbausteins als Speicher vorgesehen ist. Für den Fall, dass der Anwender keinen Instanz-Datenbaustein vorgibt, erzeugt das Software-Werkzeug einen Instanz-Datenbaustein zu diesem Funktionsbaustein, wobei die Datenstruktur des Instanz-Datenbausteins die Datenstruktur des Funktionsbausteins umfasst.

Zur Verwirklichung einer Prozessfunktionalität, z. B. zur Verwirklichung eines Reglers oder einer Bewegungssteuerung, werden der Funktionsbaustein und der Instanz-Datenbaustein in ein Automatisierungsgerät geladen und im Rahmen der Abarbeitung des Anwenderprogramms aufgerufen, wobei während der Prozesssteuerung den Variablen im Instanz-Datenbaustein Aktualwerte (aktuelle Prozesswerte) zugeführt und hinterlegt werden.

Es kann nun vorkommen, dass die Datenstruktur des Funktionsbausteins fehlerhaft ist und ein Anwender deshalb die Datenstruktur ändern muss, beispielsweise in der Art und Weise, dass eine Variable zu löschen und eine neue Variable hinzuzufügen ist. Eine derartige Änderung an der Datenstruktur des Funktionsbausteins hat Auswirkungen auf die Datenstruktur des Instanz-Datenbausteins oder der Instanz-Datenbausteine, der oder die zusammen mit dem Funktionsbaustein wiederum in das Automatisierungsgerät zu laden ist bzw. sind, wobei die Variablen mit jeweils einem Anfangswert initialisiert werden. Nachteilig ist, dass die aktuellen Werte (Aktualwerte) der Variablen des mit der "alten" Datenstruktur versehenen Instanz-Datenbausteins bzw. der mit dieser Struktur versehenen Instanz-Datenbausteine verloren gehen.

Der vorliegenden Erfindung liegt die Aufgabe zugrunde, ein Verfahren der eingangs genannten Art anzugeben, das die genannten Nachteile vermeidet. Darüber hinaus ist eine Anordnung mit einem Automatisierungsgerät und einem Engineering-System zu schaffen, welche zur Durchführung des Verfahrens geeignet ist.

Diese Aufgabe wird im Hinblick auf das Verfahren durch die im kennzeichnenden Teil des Anspruchs 1 angegebenen, im Hinblick auf die Anordnung durch die im kennzeichnenden Teil des Anspruchs 3 angegebenen Maßnahmen gelöst.

Vorteilhaft ist, dass die Aktualwerte nicht verloren gehen, wodurch die Konsistenz der Daten erhalten bleibt, wobei die CPU des Automatisierungsgerätes nicht angehalten werden muss, um die Änderungen zu bewerkstelligen.

Eine Änderung kann z. B. das Löschen und/oder das Hinzufügen und/oder das Umbenennen einer Variablen und/oder die Typänderung einer Variablen sein.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figuren 1 bis 5 und 7: Datenstrukturen von Funktionsbausteinen und Instanz-Datenbausteinen und
- Figur 6: eine Vergleichsliste.

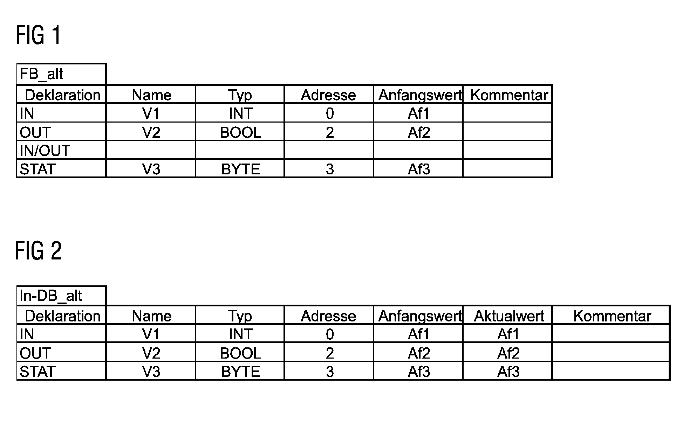

Figur 1 zeigt die Datenstruktur eines mit FB_alt bezeichneten Funktionsbausteins, welcher ein Anwender mittels eines Software-Werkzeugs auf einem Engineering-System erstellt und der zur Verwirklichung einer Prozessfunktionalität in ein auf einem Automatisierungsgerät ablaufendes Anwenderprogramm integriert ist. Dieses Anwenderprogramm weist gewöhnlich eine Vielzahl von unterschiedlichen Funktionsbausteinen zur Verwirklichung unterschiedlicher Prozessfunktionalitäten, z. B. Prozessfunktionalitäten in Form einer Bewegungssteuerung, einer Motorsteuerung oder eines Reglers, auf. Selbstverständlich weist der jeweilige Funktionsbaustein neben den in der jeweiligen Datenstruktur editierten Daten ein geeignetes Programm zur Bearbeitung dieser Daten auf, um die jeweilige Prozessfunktionalität zu bewerkstelligen. Der Funktionsbaustein FB_alt ist mit an sich bekannten Parametern - Eingangsvariable IN, Ausgangsvariable OUT, Durchgangsvariable IN_OUT, statische Daten STAT - versehen, die den Typ der Variablen festlegen und denen gemäß einer hier nicht dargestellten Variablen-Deklarationstabelle Datentypen, z. B. Datentypen in Form von INT, BOOL oder BYTE, zugeordnet werden. Im vorliegenden Beispiel deklariert der Anwender als Eingangsvariable eine Variable V1 vom Typ INT (Integer), als Ausgangsvariable eine Variable V2 vom Typ BOOL und als statische Daten die Variable V3 vom Typ BYTE. Diesen vom Anwender definierten und editierten Variablen vergibt das Software-Werkzeug automatisch Adressen, mittels denen während der Prozesssteuerung auf die Variablen zugegriffen werden kann.

Im vorliegenden Beispiel sind für die Variablen V1, V2, V3 Adressen 0, 2, 3 vorgesehen.

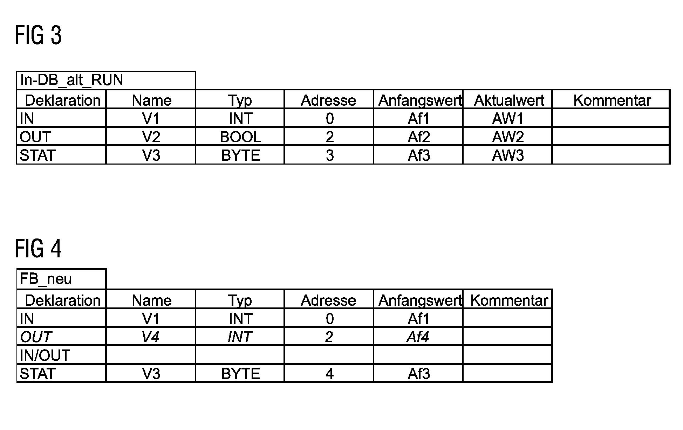

Der Funktionsbaustein FB alt wird zusammen mit seinem zugehörigen Instanz-Datenbaustein In-DB_alt (Figur 2), den das Software-Werkzeug des Engineering-Systems automatisch erstellt und der die Datenstruktur des Funktionsbausteins FB_alt umfasst, in das Automatisierungsgerät geladen. In diesem Instanz-Datenbaustein In-DB_alt sind zunächst Aktualwerte mit Anfangswerten Af1, Af2, Af3 gemäß dem Funktionsbaustein FB_alt initialisiert. Während der Steuerung des technischen Prozesses werden diese Anfangswerte durch aktuelle diesen Funktionsbaustein betreffende Prozesswerte aktualisiert, was im vorliegenden Beispiel im Instanz-Datenbaustein In-DB_alt_RUN durch Aktualwerte AW1, AW2, AW3 angedeutet ist (Figur 3). Der Instanz-Datenbaustein In-DB_alt_RUN entspricht dem In-DB_alt, die unterschiedliche Bezeichnung dieser Bausteine weist lediglich auf die unterschiedliche Befüllung dieser Bausteine mit Aktualwerten hin.

Es kann nun vorkommen, dass ein Anwender die Datenstruktur des Funktionsbausteins FB_alt fehlerhaft editiert bzw. erstellt hat und deshalb die Datenstruktur geändert werden muss. Mittels des Software-Werkzeugs ändert der Anwender die Datenstruktur gemäß einem Funktionsbaustein FB_neu, welcher den Funktionsbaustein FB_alt ersetzen soll, wobei die Aktualwerte des diesem Funktionsbaustein FB_alt zugeordneten Instanz-Datenbausteins In-DB_alt_RUN erhalten bleiben sollen, die auch für den neuen dem Funktionsbaustein FB neu zugeordneten Instanz-Datenbaustein von Bedeutung sind.

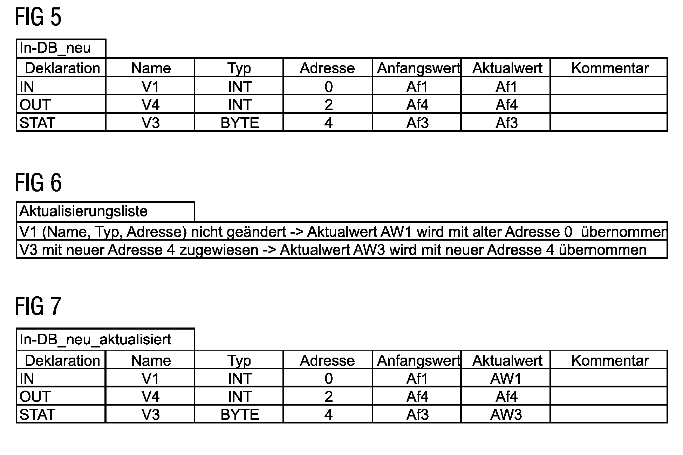

Im vorliegenden Ausführungsbeispiel wird davon ausgegangen, dass die Variablen V1, V3 erhalten bleiben, wobei für die Variable V3 eine neue Adresse 4 vorgesehen ist, und der Anwender zusätzlich eine Variable V4 für den Funktionsbaustein FB_neu editiert hat (Figur 4). Wie beschrieben, erstellt das Software-Werkzeug zu diesem Funktionsbaustein FB_neu einen Instanz-Datenbaustein In-DB neu (Figur 5), dessen Aktualwerte wiederum mit den Anfangswerten Af1, Af4, Af3 initialisiert sind.

Das Software-Werkzeug oder ein weiteres geeignetes Software-Werkzeug des Engineering-Systems erstellt ferner eine Aktualisierungsliste, die anzeigt, welche Variablen des alten Instanz-Datenbausteins In-DB_alt_RUN in den neuen, eine geänderte Datenstruktur aufweisenden Instanz-Datenbaustein zu übernehmen sind, wobei ferner die Aktualwerte dieser Variablen in diese Aktualisierungsliste hinterlegt werden. Mit anderen Worten: die Aktualisierungsliste zeigt die Variablen mit dazugehörigen Aktualwerten an, die sowohl vor als auch nach der Änderung der Datenstruktur gültig sind.

Im Vergleich zu einem alten Funktionsbaustein sind folgende Änderungen an der Datenstruktur eines neuen Funktionsbausteins und somit an der Datenstruktur eines neuen Instanz-Datenbausteins möglich:
- Löschen einer Variablen; der Aktualwert des alten Instanz-Datenbausteins ist daher nicht mehr relevant.
- Hinzufügen einer Variablen; die neue Variable wird entsprechend ihres Anfangswerts im neuen Instanz-Datenbaustein initialisiert.
- Umbenennen einer Variablen (gleicher Datentyp, gleiche Adresse, neuer Name); der Aktualwert des alten Instanz-Datenbausteins wird in den neuen Instanz-Datenbaustein übertragen.
- Verschieben einer Variablen (z. B. weil eine andere Variable gelöscht wird), wobei Datentyp und Name erhalten bleiben, aber die Adresse geändert wurde; der Aktualwert des alten Instanz-Datenbausteins wird an die neue Adresse im neuen Instanz-Datenbaustein übertragen.
- Ändern des Datentyps einer Variablen, wobei Name und Adresse erhalten bleiben; es kann der Aktualwert übertragen oder konvertiert werden.
- Änderungen von mehreren Eigenschaften einer Variablen sind möglich (z. B. der Name und die Adresse werden geändert).

Für den Fall, dass eine Variable nicht geändert wird, was bedeutet, dass sowohl der Name als auch der Datentyp und die Adresse unverändert bleiben, wird der Aktualwert des alten Instanz-Datenbausteins an die gleiche Adresse im neuen Instanz-Datenbaustein übertragen.

Der neue Funktionsbaustein FB_neu, der neue Instanz-Datenbaustein In-DB_neu und die Aktualisierungsliste werden vom Engineering-System in das Automatisierungsgerät übertragen, wobei die CPU des Automatisierungsgerätes im Rahmen einer Aktualisierungsphase aufgrund der in der Aktualisierungsliste hinterlegten Angaben den neuen Instanz-Datenbaustein In-DB_neu aktualisiert. Im Folgenden ist dieser aktualisierte Instanz-Datenbaustein mit Instanz-Datenbaustein In-DB_neu_aktualisiert bezeichnet (Figur 7).

Im vorliegenden Beispiel wurden am Funktionsbaustein FB_neu im Hinblick auf die Datenstruktur des ursprünglichen Funktionsbausteins FB_alt folgende Änderungen vorgenommen:
1. Die Variable V2 wurde gelöscht, was bedeutet, dass der Aktualwert AW2 des alten Instanz-Datenbausteins In-DB_alt_RUN nicht mehr relevant ist und daher nicht in den neuen Instanz-Datenbaustein In-DB_neu_aktualisiert übernommen wird.
2. Der Variablen V3 wurde eine neue Adresse zugewiesen, was bedeutet, dass der Aktualwert AW3 des alten Instanz-Datenbausteins In-DB_alt_RUN an die neue Adresse 4 des neuen Instanz-Datenbausteins In-DB_neu_aktualisiert übertragen wird.

Ferner ist aufgrund dessen, dass weder der Name, noch der Typ, noch die Adresse der Variablen V1 geändert wurden, der Aktualwert AW1 des alten Instanz-Datenbausteins In-DB_alt_RUN unter der gleichen Adresse in den neuen Instanz-Datenbaustein In-DB_neu_aktualisiert zu übertragen.

Dies bedeutet, dass das Software-Werkzeug eine Aktualisierungsliste gemäß Figur 6 erstellt, in welcher hinterlegt ist, dass der Aktualwert AW1 der Variablen V1 mit der alten Adresse 0 und der Aktualwert AW3 mit der neuen Adresse 4 übernommen wird. Die neue Variable V4 wird mit dem Anfangswert Af4 initialisiert.

Die CPU des Automatisierungsgerätes aktualisiert im Rahmen einer Aktualisierungsphase während der Abarbeitung eines Systemprogramms aufgrund der in dieser Aktualisierungsliste hinterlegten Angaben und der Datenstruktur des Instanz-Datenbausteins In-DB_neu den aktualisierten Instanz-Datenbaustein In-DB_neu_aktualisiert (Figur 7), wobei die CPU in diesen die Aktualwerte AW1 und AW3 einschreibt. Dies bedeutet, dass für den neuen Steuerzyklus die CPU das aktualisierte Anwenderprogramm bearbeitet, in welches der aktualisierte Funktionsbaustein FB_neu und der aktualisierte Instanz-Datenbaustein In-DB_neu_aktualisiert integriert sind. Durch die Übernahme der Aktualwerte AW1 und AW3 bleibt die Konsistenz der Daten erhalten, wobei vorteilhaft diese Übernahme ohne Neustart des Automatisierungsgerätes erfolgt bzw. die CPU nicht in einen STOP-Zustand gefahren werden muss.

## Patentansprüche

1. Verfahren zur Aktualisierung der Datenstruktur eines Instanz-Datenbausteins, welcher einem Funktionsbaustein zugeordnet ist, den ein Anwender mittels eines Software-Werkzeugs eines Engineering-Systems erstellt, wobei
- die Datenstruktur des Instanz-Datenbausteins die Datenstruktur des Funktionsbausteins umfasst, die mindestens Name, Adresse und Typ von Variablen aufweist,
- der Funktionsbaustein mit dem zugeordneten Instanz-Datenbaustein in ein Automatisierungsgerät zur Verwirklichung einer Prozessfunktionalität im Rahmen eines Anwenderprogramms zur Steuerung eines technischen Prozesses geladen wird,
- während der Steuerung des technischen Prozesses in den Instanz-Datenbaustein Aktualwerte für die Variablen eingetragen werden,
**gekennzeichnet durch** folgende Verfahrensschritte:
- für den Fall, dass an der Datenstruktur des Funktionsbausteins Änderungen im Hinblick auf Adresse, Name und/oder Typ der Variablen vorgenommen werden, wird eine Aktualisierungsliste erstellt, welche die Variablen anzeigt, die sowohl vor als auch nach der Änderung der Datenstruktur gültig sind, wobei ferner die Aktualwerte dieser Variablen in diese Liste hinterlegt werden,
- der Funktionsbaustein und der diesem zugeordnete Instanz-Datenbaustein - jeweils mit geänderter Datenstruktur - sowie die Liste werden in das Automatisierungsgerät geladen,
- die Aktualwerte der in der Aktualisierungsliste hinterlegten Variablen werden in den mit der geänderten Datenstruktur versehenen Instanz-Datenbaustein eingeschrieben, wobei neue Variablen des Instanz-Datenbausteins jeweils mit einem Anfangswert initialisiert werden.

2. Verfahren nach Anspruch 1, **dadurch gekennzeichnet, dass** die Änderungen
- das Löschen einer Variablen,
- das Hinzufügen einer Variablen,
- das Umbenennen einer Variablen und/oder
- die Typänderung einer Variablen
betreffen.

3. Anordnung mit einem Automatisierungsgerät und einem Engineering-System, welches dazu ausgebildet ist, einen Funktionsbaustein zu erstellen und diesem einen Instanz-Datenbaustein zuzuordnen, wobei
- die Datenstruktur des Instanz-Datenbausteins die Datenstruktur des Funktionsbausteins umfasst, die mindestens Name, Adresse und Typ von Variablen aufweist,
- das Engineering-System dazu ausgebildet ist, den Funktionsbaustein mit dem zugeordneten Instanz-Datenbaustein in das Automatisierungsgerät zur Verwirklichung einer Prozessfunktionalität im Rahmen eines Anwenderprogramms zur Steuerung eines technischen Prozesses zu laden,
- das Automatisierungsgerät dazu ausgebildet ist, während der Steuerung des technischen Prozesses in den Instanz-Datenbaustein Aktualwerte für die Variablen einzutragen, **dadurch gekennzeichnet, dass**
- das Engineering-System ferner dazu ausgebildet ist, für den Fall, dass an der Datenstruktur des Funktionsbausteins Änderungen im Hinblick auf Adresse, Name und/oder Typ der Variablen vorgenommen werden, eine Aktualisierungsliste zu erstellen, welche die Variablen anzeigt, die sowohl vor als auch nach der Änderung der Datenstruktur gültig sind, wobei ferner die Aktualwerte dieser Variablen in diese Liste hinterlegt werden,
- das Automatisierungsgerät ferner dazu ausgebildet ist, die Aktualwerte der in der Aktualisierungsliste hinterlegten Variablen in den mit der geänderten Datenstruktur versehenen Instanz-Datenbaustein einzuschreiben, wobei das Automatisierungsgerät neue Variablen des Instanz-Datenbausteins jeweils mit einem Anfangswert initialisiert.
